(19) Europäisches Patentamt / European Patent Office / Office européen des brevets

(11) **EP 3 704 198 B1**

(12) **EUROPÄISCHE PATENTSCHRIFT**

(45) Veröffentlichungstag und Bekanntmachung des Hinweises auf die Patenterteilung:
**20.03.2024   Patentblatt 2024/12**

(21) Anmeldenummer: **18799699.6**

(22) Anmeldetag: **02.11.2018**

(51) Internationale Patentklassifikation (IPC):
**C09J 5/02** (2006.01)      **H01F 1/147** (2006.01)
**H01F 1/18** (2006.01)

(52) Gemeinsame Patentklassifikation (CPC):
**C09J 5/02; H01F 1/14783; H01F 1/18;** B32B 7/12;
C09J 2400/163; C09J 2400/166; C09J 2433/00;
C21D 8/1283

(86) Internationale Anmeldenummer:
**PCT/EP2018/080059**

(87) Internationale Veröffentlichungsnummer:
**WO 2019/086634 (09.05.2019 Gazette 2019/19)**

(54) **VERFAHREN ZUM KLEBTECHNISCHEN VERBINDEN VON ELEKTROBLECHEN UND ELEKTROBLECHPAKETE HERGESTELLT NACH EINEM ENTSPRECHENDEN VERFAHREN**

METHOD FOR THE ADHESIVE BONDING OF ELECTRICAL SHEETS AND ELECTRICAL SHEET PACKS PRODUCED ACCORDING TO A CORRESPONDING METHOD

PROCÉDÉ DE LIAISON PAR COLLAGE DE TÔLES ÉLECTRIQUES ET PAQUETS DE TÔLES ÉLECTRIQUES FABRIQUÉS PAR UN PROCÉDÉ CORRESPONDANT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **03.11.2017   DE 102017125714**
                **07.05.2018   DE 102018110951**

(43) Veröffentlichungstag der Anmeldung:
**09.09.2020   Patentblatt 2020/37**

(73) Patentinhaber: **Fraunhofer-Gesellschaft zur Förderung
der angewandten Forschung e.V.
80686 München (DE)**

(72) Erfinder:
• **WILKEN, Ralph**
  **28359 Bremen (DE)**
• **POPP, Matthias**
  **28359 Bremen (DE)**

• **DEGENHARDT, Jost**
  **28359 Bremen (DE)**

(74) Vertreter: **Eisenführ Speiser
Patentanwälte Rechtsanwälte PartGmbB
Postfach 10 60 78
28060 Bremen (DE)**

(56) Entgegenhaltungen:
**DE-A1-102015 016 338     JP-A- H10 204 383**

• **Gebrauchsanweisung Anonymous:
"Bebrauchsanweisung & Allgemeine Hinweise zur Produktgruppe DELO-ML Anaerobe Klebstoffe", , 1. März 2017 (2017-03-01), Seiten 1-4, XP055551459, Gefunden im Internet: URL:https://cloudfront.delo.de/documents/de/instructions/DELO_ML__GEBR-D_.pdf [gefunden am 2019-02-04] in der Anmeldung erwähnt**

EP 3 704 198 B1

**Beschreibung**

Die Erfindung betrifft ein Verfahren zur Herstellung eines Elektroblechpaketes unter Verwendung eines anaerob härtenden Klebstoffes, ein Elektroblechpaket hergestellt oder herstellbar nach einem solchen Verfahren sowie eine Vorrichtung zum Erzeugen eines erfindungsgemäßen Elektroblechpaketes.

Zur Erzeugung hocheffizienter elektrischer Maschinen ist es notwendig, Blechpakete aus Einzel-Lamellen mit geringen Blechstärken zu realisieren, um Wirbelstromverluste in den Paketen möglichst effizient zu unterdrücken. Hierbei sind die Einzellamellen des Pakets gegeneinander bevorzugt durch mindestens eine Isolationsschicht elektrisch isoliert. Als Paketierverfahren ist das Stanzpaketieren gebräuchlich, bei dem eine mechanische Verklammerung zwischen den einzelnen Lamellen dazu führt, dass die Lamellen zu einem Paket verbunden werden. Durch die Verformung der Bleche werden allerdings die magnetischen Eigenschaften des Blechs und damit des Blechpakets negativ beeinflusst.

Neben dem Stanzpaketieren ist das Paketieren mittels Laserschweißnaht bekannt, bei dem ebenfalls die magnetischen Eigenschaften negativ beeinflusst werden und ebenfalls vermehrt Wirbelstromverluste auftreten.

Um Blechpakete mit guten Festigkeiten und guten magnetischen Eigenschaften zu erhalten, ist ein Blechpaketierverfahren bekannt, bei dem ein Elektroblech mit einer dünnen Klebstoffschicht vollflächig beschichtet wird. Die Härtung des Klebstoffs wird erreicht, indem entweder das Blechpaket nach dem Stanzen in einem nachgeschalteten Härtungsschritt erwärmt wird oder die Einzellamellen vor Paketierung nach dem Vorstanzen und vor dem Ausstanzen mit Überführung der Lamelle in die Paketbremse kurzzeitig erhitzt wird, z. B. über IR-Strahlung. Nachteil ist hier der hohe Energiebedarf für die Härtung und die sich daraus ergebenden hohen Zykluszeiten.

Weiterhin gibt es Klebpaketierverfahren, bei denen der Klebstoff nach dem Vorstanzen und vor dem Ausstanzen punktuell aufgetragen wird und die Härtung des Klebstoffs in der Paketbremse stattfindet. Hierbei entsteht eine nicht vollflächige Klebung mit vergleichsweise geringen Klebfestigkeiten.

In der Literaturstelle "Gebrauchsanweisung Allgemeine Hinweise zur Produktgruppe DELO -ML", www.delo.de, DELO_ML_GEBR_(2).pdf" ist beschrieben, dass auch die Oberflächenvorbehandlung nicht katalytisch wirksamer Oberflächen mit einer Messing- oder Kupferbürste vorgenommen werden kann. Es gibt aber keinen Hinweis, diesen Vorgang auf Schichten, z.B. Isolationsschichten, vorzunehmen, deren mechanische Verletzung kritisch sein kann.

Vor diesem Hintergrund war es Aufgabe der Erfindung, ein neues Herstellungsverfahren für Elektroblechpakete bereitzustellen, welches eine sichere Verbindung von einzelnen Elektroblechen zu einem Blechpaket erlaubt, wobei die magnetischen Eigenschaften des Elektroblechs möglichst wenig negativ beeinflusst werden sollten und/oder Wirbelstromverluste effizient unterdrückt werden sollten und/oder gleichzeitig eine gute Festigkeit des Blechpaketes gewährleistet werden kann.

Bevorzugt sollte dieses Verfahren in den Stanzprozess einbaubar sein, bzw. mit dem Stanzprozess in unmittelbarem zeitlichen Zusammenhang stehen. Außerdem sollte das Verfahren bevorzugt mit hoher Geschwindigkeit erfolgen und/oder wenig oder keine Einbußen in der elektrischen Isolierungswirkung zwischen den Lamellen bewirken.

Gelöst wird diese Aufgabe durch ein Verfahren zur Herstellung eines Elektroblechpaketes, umfassend die Schritte:

a) Bereitstellen von Elektroblechband (19) als Ausgangsmaterial für die Blechlamellen für das Elektroblechpaket (11),

b) Beschichten des Elektroblechbandes (19) mit einer Isolationsschicht auf einer oder beiden Seiten,

c) Beschichten des Elektroblechbandes (19) auf der einen Seite mit einem anaerob härtenden Klebstoff,

d) Reiben der anderen Seite des Elektroblechbandes (19) mit einer Reibevorrichtung (3), die beryllium- und/oder übergangsmetallhaltige Oberflächenstrukturen, bevorzugt kupferhaltige Oberflächenstrukturen umfasst,

e) Trennen der einzelnen Lamellen für das Elektroblechpaket (11) aus dem Elektroblechband (19),

f) Kontaktieren der Lamellen für das Elektroblechpaket (11) jeweils durch Inkontaktbringen der einen Seite der einen Lamelle mit der anderen Seite der nächsten Lamelle und

g) Aushärten des Klebstoffes.

Ein Elektroblech im Sinne der vorliegenden Erfindung ist ein Blech, das durch einen geeigneten Glühprozess weichmagnetische Eigenschaften erhalten kann, bevorzugt die Anforderungen der DIN EN 10106:2016-03 oder DIN EN 10107:2014-07 erfüllen kann.

Bevorzugt ist ein Elektroblech im Sinne der vorliegenden Erfindung ein Werkstoff, der über weichmagnetische Eigenschaften verfügt und z.B. als Werkstoff für Magnetkerne geeignet ist. Bevorzugt handelt es sich bei Elektroblech um kaltgewalztes Material aus einer Eisen-Siliziumlegierung, bei dem daraus erzeugte Lamellen zur Herstellung von magnetischen Kreisen für elektrische Maschinen, insbesondere von Eisenkernen von Dynamos, Generatoren, Elektromotoren, Transformatoren, Relais, Schaltschützen, Drosselspulen, Zündspulen, Stromzähler und steuerbare Ablenkmagneten einsetzbar sind. Ein Elektroblechband ist hierbei ein wickelbares Material aus Elektroblech, das im Verhältnis zu seiner Länge eine geringe Breite hat.

Besonders bevorzugt im Sinne der vorliegenden Erfindung ist ein Elektroblech ein kaltgewalztes, nicht kornorientiertes Elektroblech im schlussgeglühten Zustand nach DIN EN 10106:2016-03 oder ein kornorientiertes Elektroblech im schlussgeglühten Zustand nach DIN EN 10107:2014-07.

Im Sinne des vorliegenden Textes bilden Einzellamellen gemeinsam das Elektroblechpaket, wobei die einzelnen Lamellen voneinander elektrisch isoliert sind. Der Schritt f) im Sinne des erfindungsgemäßen Verfahrens bedeutet nicht, dass die Lamellen selbst in direktem Kontakt miteinander kommen müssen, sondern es reicht hierbei, wenn die ursprünglichen getrennten Lamellen in mittelbaren Kontakt miteinander kommen, insbesondere wenn die zueinander gerichteten Seiten der zu kontaktierenden Lamellen beschichtet sind (oder auch nur eine von ihnen), reicht es, wenn die Kontaktierung über die Beschichtung (en) erfolgt.

Ein anaerob härtender Klebstoff im Sinne der vorliegenden Erfindung ist ein solcher Klebstoff, der unter anaeroben Bedingungen aushärtet. Bevorzugte anaerob härtende Klebstoffe sind solche mit einer Dimethacrylatbasis und/oder ausgewählt aus der Gruppe bestehend aus 3M Scotch-Weld GM 74, Locite 620, LOCTITE 518, LOCTITE 577, Delo ML 5327, Delo ML 5249, Delo ML UB 160, Permabond HM 135,Permabond A 131, Permabond A 1046, Permabond A130, Cyberbond RL 65 und Cyberbond RL 67, Ebenfalls verwendet werden können Klebstoffe, die neben dem anaeroben Härtungsmechanismus noch einen zweiten Härtungsmechanismus aufweisen, wie z.B. die Licht- oder UV-Härtung. Zu dieser Gruppe gehören z.B. die Klebstoffe Delo ML DB 133, Delo ML 135, Delo ML 136 und Delo ML 180. Weitere Hinweise zu anaearob härtenden Klebstoffen finden sich auch in der DE 102013017107 A1, insbesondere im Absatz [0008]. Grundsätzlich sind die erfindungsgemäß einzusetzenden anaerob härtenden Klebstoffe für das Aushärten auf einen metallischen Katalysator angewiesen. Dieser metallische Katalysator ist ein Übergangsmetall oder Beryllium, bevorzugt ausgewählt aus der Gruppe bestehend aus Beryllium, Eisen, Mangan, Kobalt und Kupfer und besonders bevorzugt Kupfer $\geq$ 99%, weiter bevorzugt Kupfer $\geq$ 99,0% weichgeglüht, weiter bevorzugt Kupfer 99,9% weichgeglüht. Im Sinne der vorliegenden Erfindung sind bei den genannten Metallen auch deren Verbindungen und Legierungen mit umfasst.

Reiben im Sinne der vorliegenden Erfindung ist ein Kontaktieren zweier Oberflächen, wobei wenigstens eine der beiden Oberflächen, bevorzugt beide Oberflächen lateral zur Kontaktfläche bewegt werden. Dabei kann das Reiben ein sehr kurzer Vorgang sein, wenn es z.B. im Rahmen eines Strahlvorganges geschieht, bei dem Partikel mit verhältnismäßig hoher Geschwindigkeit auf eine Oberfläche gestrahlt werden. Selbstverständlich ist, dass bei dem Reibvorgang stets ein Anpressdruck vorhanden sein muss. Beim Reiben im Sinne der vorliegenden Erfindung werden dabei stets zwei Festkörper unter den genannten Bedingungen kontaktiert. Bevorzugt findet das Reiben in Form von Bürsten statt.

Dementsprechend ist die bevorzugte Vorrichtung zum Reiben eine Bürste, ein Schwamm oder ein Pad mit beryllium- und/übergangsmetallhaltigen Oberflächenstrukturen. Sofern es sich bei der Reibvorrichtung um eine Strahlvorrichtung handelt, finden sich die entsprechenden metallhaltigen Oberflächenstrukturen im Sinne des vorliegenden Textes in dem Strahlmittel. Selbstverständlich ist, dass im Sinne der vorliegenden Erfindung die jeweils metallhaltigen Oberflächenstrukturen in Kontakt mit dem Elektroblechband gebracht werden. Bevorzugte Oberflächenstrukturen für das Reiben im Sinne der vorliegenden Erfindung sind dabei beryllium- und/oder übergangsmetallhaltige Filamente oder Borsten einer Reibvorrichtung in Form eines Schwammes, Pads oder besonders bevorzugt einer Bürste. Dabei ist besonders bevorzugt, dass die erfindungsgemäß einzusetzenden Oberflächenstrukturen Kupfer umfassen oder daraus bestehen.

Trennen im Sinne der vorliegenden Erfindung ist bevorzugt ein vollständiges Abtrennen eines einzelnen Teiles (einer einzelnen Lamelle) aus dem Elektroblechband. Bevorzugt erfolgt das Trennen in Form von Schneiden, insbesondere Laserschneiden oder Strahlschneiden, z.B. Wasserstrahlschneiden oder besonders bevorzugt in Form von Stanzen, z.B. in Form von Rotationsstanzen.

Dabei ist es selbstverständlich, dass die Schritte des erfindungsgemäßen Verfahrens nicht in der aufgeführten Reinfolge erfolgen müssen, sondern der Fachmann die Verfahrensschrittabfolge angemessen variieren kann. So wird der Fachmann z.B. den Schritt c) nach dem Schritt d) für den Fall ausführen, dass der Anaearobklebstoff auf die in Schritt d) geriebene Seite des Elektroblechbandes aufgetragen werden soll.

Bei dem erfindungsgemäßen Verfahren konnte überraschenderweise gezeigt werden, dass durch das Reiben insbesondere in Form von Bürsten in Schritt d) auf der Elektroblechoberfläche einerseits ausreichend Kupfer zur Katalyse des Härtungsprozesses auf die Elektroblechoberfläche übertragen wurde und andererseits die Isolationseigenschaften der Isolationsschicht, sofern vorhanden, hinsichtlich Isolationseigenschaften nicht eingeschränkt wurden. Erfindungsgemäß ist es bevorzugt, dass das Reiben, insbesondere das Bürsten auf einer mit einer Isolierschicht versehenen Seite des Elektroblechbandes erfolgt.

Bevorzugt wird in dem erfindungsgemäßen Verfahren ein anaerob härtender Klebstoff, der bei anaeroben Bedingungen und bei Anwesenheit eines Katalysators aushärtet. Üblicherweise wird hierfür ein flüssiger Aktivator (eine metallionenhaltige Lösung) aufgetragen, um das zur Härtung notwendige katalytische Übergangsmetall, bevorzugt Kupfer, aufzutragen.

Die erfindungsgemäße einzusetzende Isolationsschicht umfasst kein Kupfer und bevorzugt weder Beryllium, Mangan noch Kobalt und ganz besonders bevorzugt kein Übergangsmetall, das als Aktivator für den Aushärtungsprozesses des anaerob härtenden Klebstoffes wirken würde. Bevorzugt ist zudem an der Oberfläche der Isolierschicht die Eisenkonzentration $\leq 1$ at% Eisen (gemessen mittels XPS). Besonders bevorzugt ist an der Oberfläche der Isolierschicht kein Eisen enthalten.

Weitere Vorteile des erfindungsgemäßen Verfahrens, insbesondere auch in seinen oben beschriebenen und auch nachfolgend weiter erwähnten Ausführungsformen, sind darin zu sehen, dass einerseits Elektrobleche sicher geklebt werden können, andererseits die Fertigungsumgebung, insbesondere die Vorrichtung, die Trennen (insbesondere zum Stanzen) der Lamellen aus dem Elektroblechband eingesetzt wird, davor bewahrt wird, dass ggf. verschleppter Klebstoff aushärtet und so die Vorrichtung verunreinigt oder sogar blockiert.

Dies wird dadurch gewährleistet, dass der Trenn- insbesondere Stanzvorgang unter aeroben Bedingungen erfolgt und bevorzugt zusätzlich die Vorrichtung zum Trennen der Lamellen und die Stapelvorrichtung an den Laufflächen, Schneidkanten und Schneidflächen und Oberflächen deutlich verminderte, weiter bevorzugt keine katalytische Aktivität aufweist, und zur Aushärtung sowohl anaerobe Bedingungen herrschen müssen als auch der Katalysator vorhanden sein muss, der in dieser vorliegenden Erfindung ein Übergangsmetall oder Beryllium oder eine entsprechende Legierung sein muss, insbesondere geeignet ist hierbei Kupfer. Besonders bevorzugt wird diese Trennvorrichtung umfassend das Trenn-(Stanz)werkzeug und die Bremse aus hochlegierten Werkzeugstählen gefertigt, die auf den anaeroben Klebstoff geringe katalytische Wirkung besitzen.

Im erfindungsgemäßen Verfahren wird im Schritt d) bevorzugt die nicht mit Klebstoff zu beschichtende Seite (andere Seite) des Elektroblechbandes mit einer übergangsmetallhaltigen oder berylliumhaltigen Oberflächenstrukturen (insbesondere Borsten) umfassende Vorrichtung (insbesondere einer Bürste), insbesondere einer messing-, kupfer-, bronze-(insbesondere phosphorbronze- oder rotguss-), eisen-, stahl-, mangan- oder berylliumhaltige Borsten umfassenden Bürste gebürstet, wobei es -überraschenderweise - zu einem ausreichenden Übertrag des Katalysatormaterials kommt, so dass die Aushärtung des anaerob härtenden Klebestoffes unter anderen Bedingungen nicht nur gewährleistet ist, sondern sogar ohne Verzögerung eintritt. Gleichzeitig wird bevorzugt durch (ggf. nur partielle) Abrasion der obersten Schicht des Elektroblechs das Elektroblech von ggf. vorhandenen adhäsionsmindernden Substanzen befreit, die Oberfläche geringfügig aufgeraut und so die Klebbarkeit der Elektroblechoberfläche verbessert.

Bei einer bevorzugten erfindungsgemäß einzusetzenden Reibvorrichtung, insbesondere einer Bürste, handelt es sich um einen Träger von übergangsmetallhaltigen und/oder Beryllium-Oberflächenstrukturen insbesondere Filamente, insbesondere kupfer- oder eisenhaltigen Filamente, wobei in einem bevorzugten Verfahren die erfindungsgemäß bevorzugt einzusetzende Reibvorrichtung auch andere Filamente umfasst wie tierische Haare, Borsten oder Federn, Kunststofffasern und -filamente, Basalt- und Glasfasern und -filamente, Mikrofasern, die weder Beryllium, Eisen und Kupfer noch andere Übergangsmetalle enthalten.

Mit solchen Reibvorrichtungen, insbesondere Bürsten können neben der Übertragung des für den Aushärtungsprozess notwendigen Katalysators auch weitere Aufgaben wie zum Beispiel ein Reinigen des Elektroblechbandes von noch anhaftenden Verunreinigungen erfolgen. Im erfindungsgemäßen Verfahren wird im Schritt e) das Trennen der Einzellamellen aus dem Elektroblech durch einen Stanzprozess, besonders bevorzugt durch einen Stanzprozess mit einem Folgestanzwerkzeug durchgeführt.

Dieser Trennprozess kann in einer weiteren bevorzugten Ausführungsform durch Laserschneiden, Strahlschneiden, bevorzugt Wasserstrahlschneiden oder Rotationsstanzen auf Basis von zwei gegenüberliegenden Walzen mit aufliegenden Schneidkanten geschehen.

Die Konturgebung der Einzellamelle kann in einer weiteren Ausführungsform auch erst nach dem Klebpaketierprozess erfolgen. Für die subtraktive Formgebung kommen Fräsverfahren, Draht- oder Funkenerosion, Laserschneiden, Strahlschneiden und zur besonders genauen Konturgebung bevorzugt Schleif- und Polier-Verfahren in Frage. Dabei ist es besonders vorteilhaft, orthogonal zur Blechnormalen zu schleifen und zu polieren, um das geklebte Blechpaket möglichst gering mechanisch zu belasten und die Entstehung von Leitfähigkeitspfaden an den Schnittkanten zu verhindern.

Erfindungsgemäß ist ein Verfahren bevorzugt, wobei Schritt g) wenigstens teilweise in einer Stapelvorrichtung geschieht, die die Orientierung der einzelnen Blechlamellen zueinander sicherstellt. Diese Stapelvorrichtung kann aus beweglichen Seitenteilen bestehen, die bei Hinzufügen einer Lamelle leicht (bevorzugt hydraulisch) auseinanderfahren, um das Einlegen der Lamelle zu ermöglichen. Durch einen Stempel wird die neu hinzugefügte Blechlamelle auf den Stapel gepresst. Gleichzeitung und / oder darauffolgend fahren die Seitenteile zusammen und justieren die Position der neuen Blechlamelle in Bezug zum Schichtstapel. Die Oberflächen der Stapelvorrichtung, die mit den Blechlamellen in Kontakt kommen, weisen deutlich verminderte, weiter bevorzugt keine katalytische Aktivität in Bezug auf die Aushärtung des Klebstoffs auf. Sofern der Werkstoff, aus dem diese Stapelvorrichtung gefertigt ist, solche katalytische Aktivität aufweist, werden die Oberflächen, die mit den Blechlamellen in Kontakt kommen, bevorzugt mit nicht katalytisch aktivem Material beschichtet. Die Stapelvorrichtung kann Bestandteil der Stanzvorrichtung sein (dann wird sie auch oft als "Bremse" bezeichnet), sie kann aber auch getrennt von der Stanzvorrichtung sein, dann müssen die Lamellen nach dem Auslochen zur Stapelvorrichtung transferiert werden.

Bei einer bevorzugten Stanzvorrichtung, bevorzugt mit mehreren Stanzstationen (Folgeverbundwerkzeug) erfolgt Schritt g) wenigstens teilweise in der Bremse, in die die Lamellen nach der Ausstanzvorrichtung transferiert werden. Der Stempel sorgt in diesem Fall häufig für das Verpressen der neuen Lamelle mit dem Schichtstapel.

Eine Ausstanzvorrichtung im Sinne dieses Textes ist eine (Teil-)Vorrichtung zum Durchtrennen des Elektroblechs und umfasst bevorzugt eine Matrize und einen Stempel (Patrize). Die Ausstanzvorrichtung, die die Trennung der Lamelle aus dem Elektroblech bewirkt, wird auch als Auslochstation bezeichnet.

Die Bremse der Stanzvorrichtung ist dabei der Teil der Stanzvorrichtung, in den die vereinzelten Lamellen nach dem Stanzvorgang fallen (oder gedrückt werden) und so zu dem (zukünftigen) Elektroblechpaket gestapelt werden. Dabei wird die Bremse für das erfindungsgemäße Verfahren so ausgestaltet, dass bei Aufeinanderstapeln von zwei Lamellen zwischen diesen Lamellen eine anaerobe Bedingung vorherrscht. Die Bremse ist dabei bevorzugt eine Stapelvorrichtung in oben beschriebenem Sinne.

Erfindungsgemäß ebenfalls bevorzugt ist, dass der Schritt g) (das Kontaktieren der Lamellen) ebenfalls in der Bremse erfolgt. Somit ist sichergestellt, dass die zum Aushärteprozess des Klebstoffs notwendigen zwei Voraussetzungen (Katalysator und anaerobe Bedingungen) erst in der Bremse vorhanden sind.

Grundsätzlich ist anzumerken, dass die katalytisch wirksamen Metalle als Bestandteil der entsprechenden Reibvorrichtungen insbesondere Borsten, z. B. Legierungen, Oxide, Hydroxide, Carbonate oder Carboxylate der Übergangsmetalle bzw. des Berylliums sein können, wobei in diesem Zusammenhang als Metalle Beryllium, Eisen, Mangan, Kobalt und Kupfer bevorzugt sind, wobei Kupfer ganz besonders bevorzugt ist. Sofern es sich bei den katalytisch wirksamen Bürstenfilamenten um metallische Filamente Berylliumhandelt, wird es häufig so sein, dass das Material aus den Bürsten in Form von oxidüberzogenen Partikeln mit einem metallischen Kern auf die Oberfläche der Blechisolationsschicht übertragen wird.

Erfindungsgemäß bevorzugt ist ein Verfahren, wobei die beryllium- und/oder übergangsmetallhaltigen Oberflächenstrukturen, insbesondere Borsten einen Durchmesser von $\leq$ 1 mm und $\geq$ 5 $\mu$m, bevorzugt $\leq$ 500 $\mu$m und $\geq$ 10 $\mu$m, weiter bevorzugt $\leq$ 250 $\mu$m und $\geq$ 20 $\mu$m und besonders bevorzugt $\leq$ 125 und $\geq$ 30 $\mu$m besitzen und/oder eine Vickershärte von 25 - 200, bevorzugt 40 - 100 für die beryllium- und/oder übergangsmetallhaltigen Oberflächenstrukturen, insbesondere Borsten (Vickershärte 100g Prüfkraft) und/oder eine nominelle Zugfestigkeit von $\leq$ 600 MPa und $\geq$ 10 MPa, bevorzugt $\leq$ 500 MPa und $\geq$ 50 MPa, weiter bevorzugt $\leq$ 400 MPa und $\geq$ 200 MPa aufweisen. Dabei ist die nominelle Zugfestigkeit ein besonders bevorzugt auszuwählendes Begrenzungskriterium.

Grund hierfür ist, dass ohne die Erkenntnis der vorliegenden Erfindung der Fachmann dazu geneigt gewesen wäre, Filamente (insbesondere Borsten) mit hohem E-Modul und hoher Härte sowie hoher Zugfestigkeit auszuwählen, um einer frühzeitigen Abnutzung entgegenzuwirken und um Kräfte zuverlässig auf das Bauteil übertragen zu können, ohne das Filamentmaterial plastisch zu verformen. So besitzen handelsübliche Messing- oder Bronzebürsten viele harte Messingfilamente, typischerweise aus CuZn36, CuZn37 oder CuSn6, die üblicherweise über nominelle Zugfestigkeiten von über 600 MPa besitzen.

Es hat sich überraschenderweise herausgestellt, dass mit solchen Zugfestigkeiten nicht alle bevorzugten gewünschten Aspekte der vorliegenden Erfindung in einem hohen Maße erfüllt werden können.

Das Aspektverhältnis eingesetzter Borsten, also Länge der Borsten zu Durchmesser, ist bevorzugt $\leq$1000 und $\geq$10, besonders bevorzugt $\leq$500 und $\geq$50, weiter bevorzugt $\leq$250 und $\geq$100. Bei diesen Aspektverhältnissen ist für die Borsten ein besonders gutes elastisches Verhalten zu beobachten, ohne bei geringen Höhenunterschieden oder Vibrationen des Stahlbands plastisch verformt zu werden. Weiterhin ist bei diesen Aspektverhältnissen sichergestellt, dass die Borsten eine vorteilhafte Normalkraft auf das Stahlband ausüben können.

Um sowohl Abrasivität als auch Abnutzung der Borsten einzustellen, stellt der Fachmann den Winkel aus Borstenausrichtung und Bewegungsvektor des Elektrobands gezielt ein. Ein Winkel $\geq$ 90° ist besonders unvorteilhaft, weil in diesem Fall die Borsten sehr schnell plastisch verformt werden (Wegknicken der Borsten). Ein zu kleiner Winkel ist unvorteilhaft, weil die Kontaktstelle der Borste mit dem Elektroblech nicht ausschließlich am Ende der Borste liegen kann und es so zu signifikant schnellerer Abnutzung der Borsten kommen kann. Der Fachmann wählt daher bevorzugt Winkel zwischen 2 und 80 °, besonders bevorzugt zwischen 10 und 70°, weiter bevorzugt zwischen 25 und 60 °, am bevorzugtesten 45°.

Der Fachmann sieht bevorzugt bei Auslegung des Trennwerkzeugs vor, dass der Reib-, insbesondere Bürstprozess ohne große in Richtung der Flächennormalen des Bands auftretenden Bewegungen und oder Schwingungen ausgeführt wird. Hierfür sieht bevorzugt der Fachmann Bandberuhigungsstationen vor, die diese Bewegungen minimieren. Auch beim Auftrag des Klebstoff sind solche Beruhigungsmaßnahmen vorteilhaft.

Um ein Verschleppen von Cu-haltigen Partikeln in der Prozessfolge zu verhindern, sieht der Fachmann bevorzugt Reinigungsstationen vor, die überschüssige oder nicht am Elektroblech adhärierende Partikel zu entfernen. Dies wird weiter bevorzugt unmittelbar nach dem Reibprozess durchgeführt. Hierfür können Vliese, aber auch Reinigungsbürsten, z.B. Schwertbürsten eingesetzt werden. Gleichzeitig wird ggf. in dem Reibprozess entstandener minimaler Abrieb der Isolationsschicht entfernt. Somit wird sichergestellt, dass die Klebstoffschichtdicken nicht durch die Partikelgröße des Abriebs der Isolationsschicht limitiert werden. Dies ist besonders wichtig, wenn Klebstoffschichtdicken $\leq 5$ μm realisiert werden sollen. Mit dieser Ausgestaltung der katalysatorhaltigen Reibvorrichtung, insbesondere in den bevorzugten Varianten, hat es sich erwiesen, dass die Übertragung des Katalysators (Beryllium und/oder Eisen, Kupfer oder andere Übergangsmetalle) für die Härtung des anaerob härtenden Klebstoffes besonders zuverlässig erfolgt, während ebenso besonders zuverlässig die Isolationswirkung der Isolationsschicht erhalten bleibt. Generell sind bei der Auswahl der geeigneten Reibmittel, insbesondere Borsten für die einzusetzenden Bürsten die Härte so zu wählen, dass sie nicht deutlich härter als die Isolationsbeschichtung ist. Hierzu wird der Fachmann an die eingesetzte Isolationsbeschichtung angepasste Borsten verwenden.

Gleichzeitig oder zusätzlich wird der Fachmann den Filamentdurchmesser der katalysatorhaltigen Reibmittel, insbesondere Borsten so wählen, dass einerseits ein ausreichender Abrieb gewährleistet ist, andererseits aber auch die durch die Borsten in der Isolationsschicht erzeugten Riefen nicht zu groß und insbesondere nicht zu tief sind.

Ohne an eine Theorie gebunden zu sein, ist zu erwarten, dass durch das Bürsten eine tribologische Beanspruchung der Isolationsbeschichtung des Elektroblechs entsteht. Dabei kann es zu einer Ausbildung eines Transferfilms oder tribologischen Filmes kommen, der die Bestandteile der Reibmittel sowie Bestandteile der Isolationsschicht umfasst und auf der Isolationsschicht verbleibt.

Im erfindungsgemäßen Verfahren ist es bevorzugt, dass die Bürste mit den beryllium- und/oder übergangsmetallhaltigen Borsten ausgewählt ist aus der Gruppe bestehend aus Tellerbürste, Plattenbürste, Streifenbürste, Schwertbürste Topfbürste, Kegelbürste, Rollenbürste, Rundbürsten und Spiralbürste.

Diese Formen von Bürsten haben sich für das erfindungsgemäße Verfahren als besonders geeignet erwiesen, wobei weiter bevorzugt ist, dass die eingesetzte Bürste eine rotierende Bewegung auf dem Elektroblechband (insbesondere mit einer Isolationsschicht) vollführt.

Der Fachmann achtet weiterhin darauf, dass sowohl das Reiben in Bereichen der Vorrichtung zur Durchführung des erfindungsgemäßen Verfahrens abläuft, bei denen das Elektroband beruhigt ist und zu starke Vibrationen des Elektrobands durch den Trennprozess vermieden werden. Hierfür trifft der Fachmann geeignete Vorkehrungen durch Bandberuhigung.

Im Zweifelsfall kann die Reibvorrichtung selbst das Elektroband beruhigen.

Um die Wahrscheinlichkeit zu verringern, dass ggf. verschleppte Klebstoffmengen an ungewünschten Stellen, z.B. im Stanzwerkzeug, aushärten, ist ebenfalls eine Verschleppung von Katalysatorpartikeln aus dem Reibprozess zu vermeiden. Bevorzugt wird eine Absaugung an der Reibvorrichtung angebracht. Die Position der Absaugung wird so gewählt, dass die entstehenden Partikel abgesaugt werden, bevorzugt in Richtung des Geschwindigkeitsvektors der Relativbewegung zwischen Borstenspitzen und Elektroblech.

Weiterhin bevorzugt kann eine Verschleppung von Partikeln verhindert werden, indem die geriebenen (insbesondere gebürsteten) Oberflächen durch ein Schwamm oder Tuch abgewischt werden und so lose anhaftende Partikel entfernt werden. Diese Tücher sind entweder umlaufend konzipiert mit einer Reinigungsstation außerhalb der Stanze oder müssen regelmäßig ersetzt werden. Vorteilhaft kann es sein, dass das Tuch oder der Schwamm mit einem flüssigen Medium befeuchtet ist.

Die Verschleppung der Katalysator-Partikel kann ebenfalls durch eine Schwertbürste vermieden werden. Hier ist die Bürste mit weichen Filamenten ausgestattet und entfernt so lose anhaftende Partikel. Auch diese Schwertbürste ist bevorzugt mit einer Reinigungsstation ausgestattet.

Wie bereits oben beschrieben ist es bevorzugt, dass das Reiben (insbesondere Bürsten) auf der Isolationsschicht durchgeführt wird, wobei diese selbstverständlich weiter bevorzugt bereits vollständig ausgehärtet ist.

Analog können die Oberfläche durch Schwämme oder Tücher vorbehandelt werden, die übergangsmetallhaltige oder Beryllium-haltige Filamente, bevorzugt kupferhaltige Filamente beinhalten.

Analog können die Oberflächen durch Strahlverfahren vorbehandelt werden, bei dem das Strahlmittel kupferhaltig ist, z.B. eine Mischung aus Kupferpulver und Kunststoffgranulat mit geringer Abrasivität. Hierbei ist darauf zu achten, dass der Strahlwinkel so eingestellt wird, dass möglichst flache Partikel an der Oberfläche des Elektroblechs entstehen. Hohe Strahldrücke bei kleinen Strahlwinkeln (Strahlwinkel = 90° - (Winkel des Geschwindigkeitsvektors zur Probennormalen)) sind hierbei von Vorteil.

Analog können die Oberflächen durch ein Strahlverfahren behandelt werden, bei dem der Strahlmittelstrahl zuerst auf ein kupferhaltiges Target trifft, dort kupferhaltige Partikel erzeugt und dieses Strahlmittel mit den so erzeugten kupferhaltigen Partikeln schließlich auf die Oberfläche des vorzubehandelnden Elektroblechs trifft. Auch hier sind hohe Strahldrücke bei kleinen Strahlwinkeln (Strahlwinkel = 90° - (Winkel des Geschwindigkeitsvektors zur Probennormalen)) von Vorteil.

Grundsätzlich - und nicht erfindungsgemäß - kann die Oberfläche mit einer kupferpartikelhaltigen Dispersion, z.B. in Form eines Aerosol beaufschlagt werden, z.B. durch Sprühen einer Dispersion von Kupferpartikeln in einem Dispersionsmittel, z.B. Wasser, Ethanol, oder Polymerkomponente eines anaerob härtenden Klebstoffs. Nachteilig ist hierbei, dass die Kupferpartikel mindestens in einer Dimension deutlich kleiner sein sollten als die Schichtdicke, die in bevorzugten Ausführungsformen < 1 μm. Die Herstellung dieser Partikel ist aufwändig, die Verwendung von Lösungsmitteln für die Umwelt nachteilig, und sofern Wasser als Dispersionsmittel eingesetzt wird, wegen der notwendigen Trocknung für schnelle Prozesse nicht geeignet.

Ebenfalls grundsätzlich - und nicht erfindungsgemäß - kann die Abscheidung von übergangsmetallhaltigen oder Beryllium-haltigen Partikel auch in einem Flammverfahren aus der Gasphase erfolgen. Hier ist nachteilig, dass die bevorzugt entstehenden oxidischen Nanopartikel in die Gasphase abgegeben werden und zu Umweltbelastungen führen.

Erfindungsgemäß bevorzugt ist ein Verfahren, wobei in Schritt c) der Klebstoff flächig oder teilflächig bevorzugt in einem Sprüh- oder Druckverfahren aufgetragen wird. Ein vollflächiger Auftrag für den Klebstoff im Sinne des vorliegenden Textes bedeutet dabei, dass die gesamte Fläche der (gegebenenfalls späteren, also noch auszustanzenden Lamelle) auf einer Seite dieser Lamelle ("der einen Seite" der Lamelle) mit dem Klebstoff beschichtet wird.

Ein teilflächiger Auftrag des Klebstoffes bedeutet im Sinne dieses Textes dabei, dass nur ein Teil der (zukünftigen) Lamelle mit dem Klebstoff beschichtet wird. Dabei kann es erfindungsgemäß bevorzugt sein, dass ein Bereich von 500 μm, bevorzugt 200 μm, weiter bevorzugt 100 μm des Randes der späteren Einzellamellen nicht mit Klebstoff beschichtet wird. Außerdem oder zusätzlich kann es bevorzugt sein, dass bei Ecken der (zukünftigen) Lamelle mit Winkeln < 180° der klebstofffreie Rand zur Ecke hin verringert wird und/oder bei Ecken der (zukünftigen) Lamelle mit Winkeln > 180° der klebstofffreie Rand zur Ecke hin gezielt vergrößert wird.

Dieser teilflächige Auftrag ist auch deswegen bevorzugt, weil der direkte Kontakt des Klebstoffs mit den Schneidkanten der Matrize und der Patrize, somit das unerwünschte Verschleppen des Klebstoffs vermieden wird.

All diese bevorzugten Maßnahmen des Klebstoffauftrags (jede einzelne und insbesondere alle gemeinsam) dienen dazu, die Wahrscheinlichkeit zu verringern, dass Klebstoff beim Kontaktieren der Lamellen austritt und so zu Verschmutzungen, insbesondere in der Bremse führt, oder dazu, dass ein sicheres Verkleben der beiden zu kontaktierenden Lamellen gewährleistet wird.

Bevorzugt findet der Klebstoffauftrag vor der Auslochstation statt. Um ein unerwünschtes Verblocken des Stanzwerkzeugs zu verhindern, ist eine zyklische Reinigung der Matrize und der Patrize, die nach dem Klebstoffauftrag folgt, bevorzugt. Diese Reinigung verhindert das unerwünschte und unkontrollierte Verschleppen des Klebstoffs. Diese Reinigung kann zum Beispiel durch verschiedene Reinigungsverfahren erfolgen:$CO_2$-Schneestrahlen, Sprühreinigung (Lösungsmittel oder wässrig basiertes Reinigungsmedium, Schneidöl), Laserverfahren, Wischen mit ggf. getränktem Tuch oder Schwamm.

Bevorzugt ist hierbei ein erfindungsgemäßes Verfahren, wobei in Schritt c) der Klebstoff in einer Schichtdicke von 0,3 μm - 50 μm, bevorzugt von 0,5 μm - 20 μm und besonders bevorzugt von 0,5 μm - 6 μm aufgetragen wird.

Auch hier dient die Dicke des Auftrags des Klebstoffes insbesondere dazu, einerseits eine gute Verklebung zu gewährleisten und andererseits eine potentielle Verschmutzung der Fertigungsumgebung durch den Klebstoff zu minimieren. Eine möglichst geringe Klebstoffschichtdicke ist auch bevorzugt, um den Stapelfaktor, also den Anteil des weichmagnetischen Werkstoffs in dem Elektroblechpaket, zu maximieren.

Ein teilflächiger Auftrag des Klebstoffs kann vorteilhaft sein, um möglichst geringe Klebschichtdicken zu erhalten.

Vorteilhaft sind Linien, die beim Verpressen verbreitert werden und so geringere Schichtdicken ermöglichen.

Vorteilhaft alternativ sind Punkte in hexagonaler Anordnung (zweidimensionales Bravais-Gitter), die beim Verpressen verbreitert werden und so geringere Schichtdicken ermöglichen, ggf. ineinander fließen. Die aufgetragene Schichtdicke dieser Linien und Punkte kann um einen Faktor 50 größer sein als die nach dem Verpressen zu erzielende Schichtdicke des Klebstoffs.

Besonders bevorzugt sind Punkte in hexagonaler Anordnung. Hier können die Punkte zu allen Seiten hin verpresst werden. Eine Entlüftung beim Verpressen kann bis zum Kontakt der einzelnen Punkte gewährleistet werden.

Um zu besonders geringen Schichtdicken zu kommen, ist die Verschiebung der beiden Fügepartner lateral zueinander vor, während oder nach dem Pressen vorteilhaft. Hierdurch wird die Verteilung des Klebstoffs gefördert. Besonders vorteilhaft ist die Bewegung, z.B. in Form einer Vibration, nach dem Inkontaktbringen und vor dem Verpressen.

Bevorzugt wird der Fachmann bei der Wahl des anaerob härtenden Klebstoffes darauf achten, dass eine ausreichend niedrige Viskosität dieses Klebstoffes gegeben ist, um möglichst geringe Schichtdicken erzeugen zu können. Ebenfalls bevorzugt wird der Fachmann darauf achten, dass die Viskosität wiederum nicht zu niedrig ist, da sonst ein unkontrolliertes Spreiten und Austreten von den gewünschten Orten erfolgen könnte. Ferner wird der Fachmann bevorzugt auf eine ausreichend hohe kohäsive Festigkeit des (ausgehärteten) Klebstoffes achten. Ein weiteres bevorzugtes Auswahlkriterium für den einzusetzenden Klebstoff ist eine ausreichende Alterungsstabilität des resultierenden Klebstoffes gegenüber medialen und thermischen Belastungen. Mögliche Richtgrößen sind hierbei beispielsweise die Beständigkeit unter Bedingungen von 150 °C in heißem Getriebeöl und/oder eine Alterung bei 85 °C und 85 % relativer Luftfeuchtigkeit. Grundsätzlich wird der Fachmann darauf achten, dass der Klebstoff den thermischen Belastungen standhält, die während des Stanzprozesses und des Aushärtungsprozesses zu erwarten sind.

In vielen Fällen wird erfindungsgemäßes Verfahren bevorzugt sein, wobei der Bereich, auf den der Klebstoff aufgetragen und/oder der Bereich, der gerieben (gebürstet) wird, jeweils mit einer Maske beschränkt wird.

Für das Reiben (Bürsten) bedeutet dies, dass gezielt nur die Flächen gerieben (gebürstet) werden können, auf denen später nach dem Kontaktieren ein Aushärten des Klebstoffes gewünscht ist. Dies gilt insbesondere für die Bereiche des Elektroblechbandes, die später die Lamellen bilden.

Ähnlich ist die Situation für den Klebstoffauftrag. Auch hier kann mittels Masken gewährleistet werden, dass genau an die Stellen der Klebstoff aufgetragen wird, an denen er erwünscht ist. Dabei ist es mittels Masken auch möglich, die Menge von Klebstoff an bestimmten Stellen zu steuern.

Dementsprechend ist es erfindungsgemäß bevorzugt, dass der Klebstoff in Kombination mit Masken in einem Sprühverfahren aufgetragen wird.

Bei einem Verfahren, bei dem der Klebstoff mittels Druckverfahren aufgebracht wird (was erfindungsgemäß in einigen Fällen ebenfalls bevorzugt sein kann), werden im Regelfall Masken entbehrlich sein. Geeignete Druckverfahren sind hierbei z. B. Durchdruck (z.B. Siebdruck, insbesondere Rollensiebdruck), Tiefdruck (z.B. Tampondruck) und Hochdruck (z.B. Flexodruck) sowie Inkjet-Verfahren.

Erfindungsgemäß bevorzugt kann es sein, dass im erfindungsgemäße Verfahren vor Schritt c) die eine Seite (also die Seite, auf die der Klebstoff aufgetragen wird) und/oder vor und/oder nach Schritt d) die andere Seite (also die Seite, die gerieben wird) einen haftverbessernden und / oder oberflächenaktivierenden Vorbehandlungsschritt, insbesondere mittels eines Plasmas, z.B. Atmosphärendruckplasmas, einer Beflammung, einer Bestrahlung mit Licht (VakuumUV / Laser) erfährt. Hierdurch ist es möglich, die Haftverhältnisse zwischen den einzelnen Lamellen nochmals zu verbessern. Durch diese Maßnahme wird ebenfalls das Benetzungsverhalten des Klebstoffs auf den Elektroblechen verbessert. Bei Fügen der Lamelle mit dem Blechstapel wird so die Kapillarität des Spalts erhöht und damit das Spreiten des Klebstoffs im Spalt gefördert. Durch diese Maßnahme sind kleinere minimale Klebstoffschichtdicken zugänglich.

Das Druckverfahren ist vorzugsweise mit dem Vorschub des Elektrobands synchronisiert. Beim Rollensiebdruck entspricht der Umfang der Rolle bevorzugt dem Vorschub oder ist ein Vielfaches des Vorschubs. Beim Rollensiebdruck läuft der Übertrag des Klebstoffs vom Sieb auf das Elektroblech während des Vorschubs des Elektrobands ab. Besonders bevorzugt ist der Antrieb der Rollensiebdruckwalze durch die Randperforation des Elektroblechs, die den Transport des Elektrobands sicherstellt.

Beim Flachbettsiebdruck läuft der Übertrag des Klebstoffs vom Sieb auf das Elektroblech bevorzugt während des Trennens ab, also in der Ruhephase des Elektrobands ohne Vorschub.

Der Fachmann achtet weiterhin darauf, dass der Klebstoffauftrag in Bereichen der Stanze abläuft, bei denen das Elektroband beruhigt ist und zu starke Vibrationen des Elektrobands durch den Stanzprozess vermieden werden. Hierfür trifft der Fachmann geeignete Vorkehrungen zur Bandberuhigung.

Im Zweifelsfall kann die Siebrolle bzw. das Flachbettsieb selbst das Elektroband beruhigen.

Erfindungsgemäß bevorzugt ist ein erfindungsgemäßes Verfahren, wobei die jeweils erste und letzte Lamelle des Elektroblechpaketes (11) an ihrer nach außen gerichteten Seite nicht Schritt c) unterworfen werden.

Auf diese Art ist es einfach, die Elektroblechpakete im Produktionsverfahren voneinander zu trennen.

Dabei ist es zudem bevorzugt, dass außerdem noch die jeweils erste und letzte Lamelle des Elektroblechpaketes an ihrer nach außen gerichteten Seite nicht Schritt d) unterworfen werden. Alternativ ist es auch möglich, dass nur der Schritt d) nicht durchgeführt wird, dies hat zwar zur Folge, dass an einer Seite jedes Blechpaketes noch Klebstoff vorhanden ist, eine Trennung ist aber trotzdem möglich.

Bevorzugt ist ein erfindungsgemäßes Verfahren, bei dem die Aushärtung des Klebstoffes durch Energiezufuhr bevorzugt in der Bremse (9) oder in anderen Bereichen der Stanzvorrichtung unterstützt wird.

Grundsätzlich kann diese Energiezufuhr während des Aushärtungsprozesses oder auch schon vor dem Aushärtungsprozess stattfinden. Vor dem Aushärtungsprozess führt es dazu, dass der Klebstoff dann, wenn der Aushärtungsprozess beginnt, bereits eine erhöhte Temperatur aufweist, sodass auch so der Aushärtungsprozess beschleunigt wird.

Erfindungsgemäß bevorzugt ist es in diesem Zusammenhang, dass die Energiezufuhr über Wärmestrahlung, besonders bevorzugt über einen IR-Wärmestrahler oder über eine direkte Wärmeübertragung (Wärmeleitung) stattfindet.

Besonders bevorzugt ist ein erfindungsgemäßes Verfahren, wobei nach Schritt d) auf der gebürsteten Fläche eine Konzentration von Übergangsmetall oder Beryllium, bevorzugt von Kupfer von $\leq 1$ Atom-%, insbesondere 0,015 Atom-% - 1 Atom-%, bevorzugt $\leq 0,1$ Atom-% vorhanden ist, gemessen mittels ESCA und bezogen auf die Gesamtzahl der mit ESCA erfassten Atome. Bevorzugt ist hier, dass für die Bestimmung der Konzentration der Übergangsmetalle nur Kupfer und Mangan berücksichtigt wurden.

Diese geringen Mengen an Übergangsmaterial und / oder Beryllium reichen überraschenderweise aus, die Aushärtungsreaktion des erfindungsgemäß einzusetzenden Klebstoffs in einer ausreichend hohen Geschwindigkeit zu gewährleisten. Dabei ist es selbstverständlich, dass für die genannten Atom-%-Angaben jeweils die Summe aus Übergangsmetall und Beryllium gemeint ist. Bevorzugt ist dabei, dass das einzige Übergangsmetall Kupfer ist, und kein Beryllium vorhanden ist.

Überraschend ist die Tatsache, dass eine entsprechend geringe Menge an Katalysatormetallen auch als heterogener Katalysator ausreicht, weil es nach gängigen Vorstellungen erforderlich ist, dass das Katalysatormetall in ionisierter Form in die (unausgehärtete) Klebstoffschicht mit einer ausreichenden Eindringtiefe als homogener Katalysator eindringen muss, um eine ausreichende Geschwindigkeit der Aushärtereaktion zu gewährleisten.

Im Zweifelsfall werden dabei die Atom-%-Konzentrationen an der Oberfläche, die gebürstet wurde, so bestimmt, wie es unten im Messbeispiel 2b beschrieben ist.

Teil der Erfindung ist auch ein Elektroblechpaket, hergestellt oder herstellbar durch ein erfindungsgemäßes Verfahren, wobei zwischen der Isolierschicht und dem Klebstoff oder im Klebstoff beryllium- und/oder übergangsmetallhaltige Partikel, bevorzugt beryllium- und/oder übergangsmetallhaltige metallische Partikel vorhanden sind.

Überraschenderweise lassen sich auch nach dem Aushärten des Klebstoffes noch in den meisten Fällen beryllium- und/oder übergangsmetallhaltige Partikel nachweisen. Dabei sind die metallischen Partikel des Katalysatormetalls bevorzugt in einer Größe von 1 - 10 $\mu$m, wobei jeweils der größte Durchmesser in der senkrechten Aufsicht auf die Lamellenoberfläche die Größe der einzelnen Partikel definiert.

Die Dicke der Partikel, also die größte Ausdehnung der Partikel senkrecht zur Lamellenoberfläche, ist hingegen deutlich kleiner. Die Dicken der Partikel liegen bevorzugt zwischen 100 nm und 3 $\mu$m. Das Aspektverhältnis, also das Verhältnis Größe der Partikel zu Dicke der Partikel liegt bevorzugt zwischen 2 und 50. Man kann daher von plättchenförmigen Partikeln sprechen.

Bevorzugt ist ein erfindungsgemäßes Elektroblechpaket, das darüber hinaus Riefen auf wenigstens einer Seite der Lamellen aufweist (gegebenenfalls mit Ausnahme der äußersten Lamellen), wobei die Riefen von dem Reib- insbesondere Bürstvorgang aus dem erfindungsgemäßen Verfahren stammen. Solche Riefen stellen regelmäßig eine lokal begrenzte Verringerung der Isolationsschichtdicke von mindestens 10 % dar. Die Abstände zwischen zwei Riefen aus dem erfindungsgemäßen Verfahren liegen bei einem Bürstenfilamentdurchmesser von 250 $\mu$m bei ca. 100 $\mu$m. Die Riefenbreite liegt dabei bei etwa 10 - 30 $\mu$m. Für die Feststellung von Riefen wird auf das Messbeispiel 1 verwiesen.

Offenbart ist auch eine Vorrichtung zum Erzeugen eines erfindungsgemäßen Elektroblechpaketes, umfassend eine Reibvorrichtung insbesondere eine Bürste (3), eine Vorrichtung (13) zum Auftragen eines anaerob härtenden Klebstoffes sowie ein Reservoir mit einem anaerob härtenden Klebstoff.

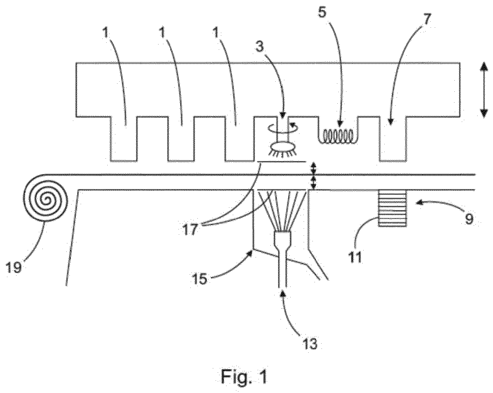

Dabei sei darauf hingewiesen, dass die hier offenbarte Vorrichtung zusätzlich jedes einzelne Bauteil/jeden einzelnen Bestandteil, wie aus den Fig. 1 - 4 hervorgeht, enthalten kann.

Figurenbeschreibung

Die Figuren 1 - 4 stellen jeweils schematisch eine Vorrichtung und einen Vorgang zur Erstellung eines erfindungsgemäßen Blechpaketes dar. Dabei haben die Bezugszeichen folgende Bedeutung:

1. Stanze

3. Tellerbürste

5. IR-Strahler

7. Auslochstation

9. Bremse

11. Blechpaket

13. Sprühvorrichtung

15. Sprühkammer

17. Maske

19. Elektroblechband

21. Rollenbürste

23. Streifenbürste

Mit Bezug auf die Figur 1 wird zunächst eine Ausführungsform des erfindungsgemäßen Verfahrens beschrieben: Das mit Isolationsbeschichtung versehene Elektroband 19 wird mittels einer Vorschubeinheit mit jedem Hub des Stanzprozesses um eine definierte Länge vorgeschoben. Unmittelbar vor dem Auslochen der Elektroblechlamelle aus dem Elektroband und Überführung der Lamelle in die Bremse 9 wird das Elektroband 19 von der Unterseite mit dem Klebstoff mittels Sprühvorrichtung 13 in der Sprühkammer 15 beschichtet. Um den Klebstoff lokal definiert aufzutragen, wird eine Maske 17 eingesetzt. Der Overspray sammelt sich an den Wänden der Sprühkammer 15 und wird so am Boden der Sprühkammer aufgesammelt. Gleichzeitig oder bei einem vorherigen Stanzfolgeschritt durch eine der Stanzen 1 wird die Oberseite des Elektrobands 19 mit einem sich drehenden Bürstenteller 3 mit Kupferfilamenten (Borstendurchmesser z.B. 0,06 mm) gebürstet. Hier wird eine Maske 17 aus dünnem Titanblech eingesetzt, in der die zu klebenden Flächen ausgelasert wurden.

Vorteilhaft im Prozess ist, dass die Masken 17 erst vor der Applikation des Klebstoffs bzw. vor dem Bürsten mit dem Elektroblech in Kontakt gebracht werden. Dies wird ermöglicht, indem die Masken 17 synchron zum Hub der Stanzwerkzeuge 1 (Abwärtsbewegung) an das Elektroblechband 19 geführt werden. Bei Aufwärtsbewegung der Stanzwerkzeuge 1 werden beide Masken synchron vom Elektroband 19 entfernt, so dass während des Vorschubs des Elektrobands 19 kein Verschmieren des Klebstoffs auftritt und ebenfalls weder Bürste 3 noch Maske 17 auf dem Elektroband 19 scheuern.

Synchron zum Hub der Stanze wird 1. der Klebstoffauftrag ausgelöst, 2. die rotierende Bürste 3 in Kontakt gebracht. Um der Abnutzung der Bürste Rechnung zu tragen, ist der Kontakt der Bürste 3 mit dem Elektroband bevorzugt nicht weggesteuert, sondern kraftgesteuert, so dass die Filamente durch den Anpressdruck der Bürste an das Elektroband elastisch verformt werden.

In der Auslochstation 7 wird die Elektroblechlamelle mit einem Stempel (Patrize) aus dem Elektroband 19 durch die Matrize hindurch ausgestanzt und direkt in eine Stanzbremse 9 überführt. Der Stempel drückt hierbei die frisch ausgestanzte Lamelle auf das sich in der Bremse befindende Blechpaket 11 und schiebt so das Blechpaket 11 um die Dicke der Blechlamelle weiter nach unten. Hierbei kommt der Klebstoff der frisch ausgestanzten Lamelle in Kontakt mit der gebürsteten Oberfläche der sich in der Bremse 6 bereits befindenden Lamelle. Hierdurch wird die Härtung des anaerob härtenden Klebstoffs initiiert. Die Pakettrennung, also die Trennung von zwei Blechpaketen 11, wird dadurch gewährleistet, dass entweder der Klebstoff in einem Hub nicht aufgetragen wird oder die Oberfläche einer Lamelle nicht gebürstet wird. Idealerweise findet weder das Bürsten der voranlaufenden Lamelle noch der Klebstoffauftrag der folgenden Lamelle statt.

Die Härtung des anaerob härtenden Klebstoffs kann durch Wärmezufuhr sowohl durch den Auslochstempel oder in der Bremse als auch durch IR-Strahler 5 im Stanzfolgewerkzeug beschleunigt werden. Im Allgemeinen ist die Betriebstemperatur des Stanzwerkzeugs höher als die Umgebungstemperatur, was bereits die Härtung des Klebstoffs beschleunigt.

Anstatt einer Tellerbürste kommen ebenfalls Streifenbürsten 23, Topfbürsten, Schwertbürsten oder Rollenbürsten 21 infrage. Anstatt des Sprühauftrags kommen ebenfalls Druckverfahren (Tampondruck, Siebdruck, Flexodruck) infrage. Weiterhin kommen Vliese und Schwämme mit an ihrer Oberfläche vorhandenen übergangsmetallhaltigen und/oder berylliumhaltigen Filamenten infrage.

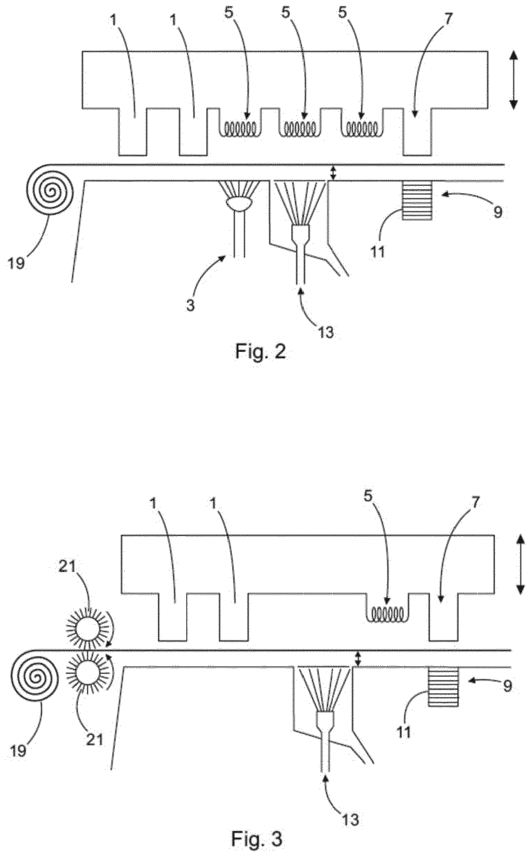

In einer weiteren Ausführungsform ist die Vorbehandlung des Elektrobands 19 vorgeschaltet und kann sowohl von der unteren als auch von der oberen Seite erfolgen (vgl. Figur 2).

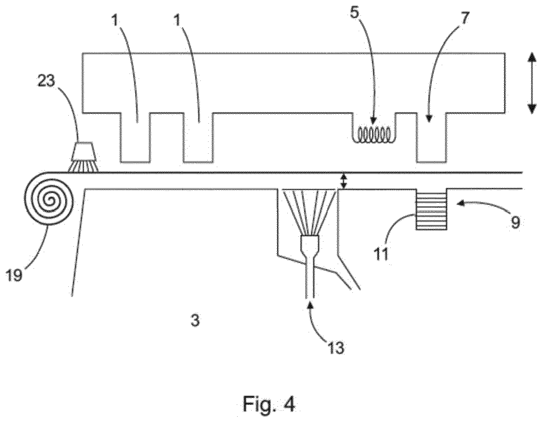

Weiterhin kann auch nur eine Seite aktiviert und dann der Klebstoff auf die aktivierte Oberfläche aufgebracht werden. Erst nach Sauerstoffausschluss, nämlich beim Inkontaktbringen dieser Blechseite mit einem weiteren Blech, startet die Reaktion (vgl. Figur 3 und 4).

Beispiele

Messbeispiel 1: Riefenbestimmung

Es werden 2 Schliffe von mindestens 2 Lamellen eines Elektroblechpakets angefertigt in der Art, dass

- die Flächennormale der mindestens einen Klebschicht orthogonal zur Flächennormale des Schliffs liegt (also in der Oberfläche des Schliffs liegt) und
- die Flächennormalen der beiden Schliffoberflächen wiederum orthogonal zueinander stehen.

Diese Schliffe werden materialographisch analysiert. Sofern die Unterscheidung der einzelnen Schichten (Elektroblech / Isolationsschicht / Klebstoffschicht) im Lichtmikroskop schwerfällt, bedient sich der Fachmann der Rasterelektronenmikroskopie.

Die durch das Bürsten entstandenen Riefen zeigen sich durch eine lokal begrenzte Verringerung der Isolationsschichtdicke von mindestens 10%. Der Fachmann misst nun für beide Schliffe die Strecke, in der 50 Riefen liegen.

Strecke 1 und Strecke 2 sind im Allgemeinen nicht gleich (nur bei 45°-Ausrichtung). Die größere der Strecken wird a, die kleinere der Strecke b genannt.

Der mittlere Abstand d der Riefen ergibt sich nun aus:

$$d = \cos(\arctan(a/b)) \times a/50$$

Typische Abstände zwischen zwei Riefen liegen bei einem Bürstenfilamentdurchmesser von 250 $\mu$m bei ca. 100 $\mu$m. Die Riefenbreite liegt bei ca. 10 bis 30 $\mu$m.

Messbeispiel 2a: Bestimmung des Beryllium- oder des Überqanqsmetallqehaltes insbesondere des Cu-Gehaltes mit ESCA (XPS).

Zur Bestimmung des Kupfergehaltes nach dem Bürsten wurden ESCA-Untersuchungen durchgeführt. Dabei ist der Gehalt jeweils auf die Gesamtzahl der mit ESCA bestimmbaren Atome bezogen angegeben.

Die ESCA-Untersuchungen wurden mit dem Spektrometer KRATOS AXIS Ultra der Fa. Kratos Analytical durchgeführt. Die Analysekammer war mit einer Röntgenquelle für monochromatisierte Al K$\alpha$-Strahlung und einer Elektronenquelle als Neutralisator ausgerüstet. Weiterhin verfügte die Anlage über eine magnetische Linse, welche die Photoelektronen über einen Eintrittsschlitz in einen Halbkugelanalysator fokussierte.

Durch Kalibrierung wurde der aliphatische Anteil des C 1s-Peaks auf 284,5 eV gesetzt. Während der Messung zeigte die Oberflächennormale auf den Eintrittsschlitz des Halbkugelanalysators.

Die Passenergie betrug bei der Bestimmung der Stoffmengenverhältnisse jeweils 80 eV und die Schrittweite 0,5 eV. Die entsprechenden Spektren werden als Übersichtsspektren bezeichnet. Bei der Bestimmung der Peak-Parameter betrug die Passenergie jeweils 20 eV und die Schrittweite 0,05 eV.

Messbeispiel 2b: Bestimmung des Beryllium- oder des Überqanqsmetallqehaltes insbesondere des Cu-Gehaltes mit ESCA (XPS) mit verbesserter Nachweisgrenze für Kupfer.

Die XPS-Untersuchungen erfolgten mit einem Thermo K-Alpha K1102-System mit vorgeschalter Argon-Glovebox für die Handhabung luftempfindlicher Proben. Parameter: Abnahmewinkel der Photoelektronen 0°, monochromatisierte Al K$\alpha$-Anregung, Constant Analyser Energy-Mode (CAE) mit 150 eV Passenergie in Übersichtsspektren (Schrittweite 0,5 eV, 2 Scans mit einer Aufnahmedauer 9min 4,2 Sek.) sowie in den energetisch hochaufgelösten Cu2p (Schrittweite 0,05 eV, 10 Scans mit einer Aufnahmedauer 12min 21 Sek.).Das hochaufgelöste Cu2p-Spektrum wird zur Quantifizierung des Kupfers herangezogen.

Analysenfläche: 0,40 mm $\varnothing$. Die Neutralisation von elektrisch nichtleitenden Proben erfolgt durch eine Kombination von niederenergetischen Elektronen und niederenergetischen Argon-Ionen. Zur Kompensation von Aufladungseffekten wird die C-C/C-H-Spezies zuzuordnende C1s-Hauptphotoemissionslinie bei der Auswertung auf 285 eV festgelegt, dadurch verschieben sich die Lagen der weiteren Photolinien entsprechend.

Die Quantifizierung erfolgt auf Basis dokumentierter relativer Sensitivitätsfaktoren der Elemente unter Berücksichtigung der spezifischen Analysatortransmissionsfunktion basierend auf der Annahme einer homogenen Verteilung der Elemente innerhalb der XPS-Informationstiefe (ca. 10 nm).

Die Nachweisgrenze der Methode ist elementspezifisch und liegt bei ca. 0,1 at%. Aufgrund der Messbedingungen und des Sensitivitätsfaktors von Kupfer liegt die Nachweisgrenze von Kupfer bei den Messungen bei 0,005 at%

Die genannten Messbedingungen sind bevorzugt, um eine weitgehende Unabhängigkeit vom Spektrometertyp zu ermöglichen.

Messbeispiel 3: Bestimmen von Beryllium- oder Übergangsmetallpartikeln, insbesondere von Kupferpartikeln

Noch nicht geklebte Proben können direkt nach dem Reibvorgang analysiert werden.

Lamellen bereits geklebter Blechlaminate werden durch schälende Beanspruchung voneinander gelöst. Dabei wird jeweils die äußerste Lamelle vom Blechpaket gelöst. Um die schälende Beanspruchung aufzubringen, bedient sich der Fachmann eines Keils, der in die Klebstoffschicht eingetrieben wird. Nach dem Lösen der Blechlamelle werden beide Bruchflächen mikroskopisch analysiert. Im Allgemeinen liegt ein Mischbruch mit adhäsiven Anteilen vor. Die Partikel befinden sich bevorzugt eingebettet in der Klebstoffschicht, "schwimmen also in dem Klebstoff". Messbeispiele 4-6 eignen sich für die eigentliche nähere Bestimmung

Messbeispiel 4: FIB-Schnitt und EDX-Messung

Diese Partikel lassen sich ebenfalls mit REM / EDX messen, nachdem an der Stelle eines Partikels die Oberfläche mittels Fast Ion Bombardments (FIB) präpariert wurde.

Für die Präparation des Querschnitts mittels FEI Helios 600 Dualbeam wurde, nachdem der Partikel lokalisiert wurde, zunächst mittels Ionen-induzierter Deposition (IBID, ion-beam induced deposition) eine etwa 30 x 2 x 1μm dicke Platin/Kohlenstoff-Schutzschicht direkt über dem Partikel abgeschieden. Anschließend wurde ein Querschnitt mithilfe von Ga+-Ionen (30kV, 21nA) präpariert und diese Querschnittsfläche final poliert (30kV, 2.8nA). Der so hergestellte Querschnitt konnte in der FEI Helios 600 DualBeam in-situ mittels Sekundärelektronen abgebildet werden. Die Sekundärelektronenabbildungen sind bei 5kV und 0.17nA aufgenommen worden. Des Weiteren wurde die Querschnittsfläche auf ihre elementare Zusammensetzung mittels energiedispersiver Röntgenanalytik (EDX) untersucht. Die gewählten Parameter für diese Untersuchung (10kV, 1.4nA bzw. 0.69nA) ermöglichen den Nachweis aller vorkommenden Elemente bei höchst möglicher lateraler Auflösung.

In seltenen Fällen, insbesondere bei (nicht bevorzugten großen Schichtdicken) kann es angebracht sein, die Klebstoffschicht komplett vom Substrat zu lösen. Dazu werden mit einem Skalpell die auf der Bruchfläche verbliebenen Klebstoffreste vom Blech gelöst und diese Klebstoffreste mikroskopisch, in diesem Fall bevorzugt mittels EDX Elementmapping analysiert. Der Fachmann wählt die Beschleunigungsspannung so, dass die Informationstiefe der Messung ≥ der Klebstoffschichtdicke ist.

Messbeispiel 5: Lichtmikroskopie:

Eingesetzt wird ein Keyence Digitalmikroskop VHX 600 mit Objektiv VH-Z 100 und Ringlichtquelle OP-72404, Vergrößerung 700x.

Es zeigen sich die Partikel in der Draufsicht, insbesondere Cu-Partikel sind so gut zu erkennen.

Falls zu geringer Kontrast zwischen Partikel und Blechsubstrat vorliegt, erfolgt eine Messung mit REM und EDX Elementmapping.

Messbeispiel 6: REM-EDX:

Ein Primärelektronenstrahl wird mit Hilfe einer Elektrodenkathode und Beschleunigung zur Anode hin, erzeugt und durch nachfolgende elektromagnetische Linsen auf die Oberfläche der zu untersuchenden Probe möglichst fein fokussiert. In der Probe werden in einem von der Beschleunigungsspannung und der Materialzusammensetzung abhängigem Wechselwirkungsvolumen Sekundärelektronen (SE), Rückstreuelektronen (BSE) und Röntgenstrahlung erzeugt. Die Energie der Röntgenstrahlung ist von der Ordnungszahl des emittierenden Atoms abhängig und damit für das betreffende Element "charakteristisch". Alle diese Signale können mit entsprechenden Detektoren registriert werden. Entsprechenden Topographie-, Material- und/oder Elementkontraste können so abgebildet werden.

EDX ist ein Verfahren zur ortsaufgelösten Elementanalyse von Feststoffen. Die energiedispersive Röntgenmikroanalyse ermöglicht die Ermittlung der Elementzusammensetzung auf einer mittels REM abgebildeten Oberfläche. Neben flächiger und Spotmessung können auch Elementmappings aufgenommen werden.

Die Beschleunigungsspannung wählt der Fachmann so, dass er in Abhängigkeit der Klebstoffschichtdicke die Partikel sicher erfasst, typischerweise 15 keV.

Eingesetztes Gerät: Hochauflösendes analytisches FE-REM Leo 1530 Gemini mit EDX (Oxford INCA mit Si- und Germanium Detektor).

Messbeispiel 7: Bestimmung der Isolationswirkung

Entweder wird der Oberflächenwiderstand mittels Franklin-Tester nach IEC 60404-11 durchgeführt oder es wird bevorzugt wie folgt vorgegangen (Messvorschrift IFAM):
Ein Elektroblech 100mm x 25mm wird auf einer Seite gebürstet. Diese Probe wird zwischen zwei Kupfer-Stempeln mit einem Durchmesser von 19,8 mm und einer Länge von 30 mm geklemmt und mit einer Kraft von 650N beaufschlagt, so dass ein Anpressdruck von 2,1 MPa entsteht. Die Stempelflächen, die mit dem Elektroblech in Kontakt kommen, sind optisch blank poliert.

Beide Cu Stempel sind über zwei Kabel mit einem Widerstandsmessgerät Keithley Multimeter 2001 verbunden. Der sich ergebende Widerstand wird mittels Zweipunktmessung gemessen. Diese Messung wird an 10 Proben widerholt und der arithmetische Mittelwert gebildet. Von diesem Widerstand wird der Widerstand abgezogen, der sich ohne Stahlblech ergibt (Leitungswiderstand und Stempelwiderstand).

Messbeispiel 8: Bestimmung der Rauigkeiten

Die Rauigkeiten der Probenoberflächen werden mithilfe des Geräts plμ Neox der Fa. Sensofar erfasst, indem Linienprofile orthogonal zur Bürstrichtung aufgenommen werden. Die Auswertung der so erfassten Linienprofile geschieht nach DIN EN ISO 4288. Bewertet werden die Rauigkeitskennwerte $R_a$ und $R_z$.

Ausführungsbeispiele

Ausführungsbeispiel 1:

Ein Elektroblech Isovac 270-35 A mit einem Isolationslack der Güte C5 (Isolationslack enthält keine Übergangsmetalle und kein Beryllium) (Hersteller VoestAlpine) der Größe eines Zugscherblechs (100 mm x 25 mm) wird mit einer Messingbürste (Borstendurchmesser 0,06 μm, Material CuZn36, Zustand weich) im Bereich der Klebfläche (10 mm) gebürstet.

Ein weiteres Elektroblech wird mit dem anaerob härtenden Klebstoff DELO ML 5327 durch eine Rakel mit einer nominellen Schichtdicke von 4 μm beschichtet.

Die gebürstete Seite des ersten Blechs wird mit der klebstoffbeschichteten Seite des zweiten Blechs in Kontakt gebracht und mit einer Klammer fixiert (anaerobe Bedingungen). Nach 2 Minuten ist die Festigkeit der Klebung ausreichend, um die Klebungen zu bewegen (Handling Festigkeit). Nach 6 Minuten bei 40 °C (typische Temperatur des Stanzwerkzeugs im Betrieb) weist die Klebung bereits Zugscherwerte von 2,5 +- 0,7 MPa auf. Nach 24h bei Raumtemperatur werden Zugscherfestigkeiten von 4,5 +- 0,8 MPa erreicht.

Nach 150h Alterung in Getriebeöl (FEBI Bilstein 39071) bei 150°C betrug die Zugscherfestigkeit noch 4,2 +- 0,5 MPa. Nach 1000h Alterung bei 85 °C und 85 rel% Luftfeuchtigkeit betrug die Zugscherfestigkeit 4,1 +- 0,2 MPa.

Ausführungsbeispiel 2:

Die Isolationseigenschaft des in Beispiel 1 genannten Elektroblechs wird mittels DIN EN 60404-11:2013-12; VDE 0354-11:2013-12 bestimmt:
Titel (Deutsch): Magnetische Werkstoffe - Teil 11: Messverfahren für die Bestimmung des Oberflächenisolationswiderstandes von Elektroblech und -band (IEC 60404-11:1991 + A1:1998 + A2:2012); Deutsche Fassung EN 60404-11:2013

Es werden abweichend vom Beispiel 1

a) keine Bürste,

b) eine Bürste mit 125 μm-Borsten (gleiches Borstenmaterial wie in Ausführungsbeispiel 1) und

c) eine Bürste mit 250 μm-Borsten (gleiches Borstenmaterial wie in Ausführungsbeispiel 1) eingesetzt.

Im Rahmen der Messgenauigkeit (-+ 10%) kann eine Reduktion des Oberflächenwiderstands des Elektroblechs durch das Bürsten nicht beobachtet werden:

- a) RhoOF= 178 13 Ohm/cm2
- b) RhoOF= 169 15 Ohm/cm2 (nach Bürsten mit 125 μm)
- c) RhoOF= 171 +- 8 Ohm/cm2 (nach Bürsten mit 250 μm)

Vergleichsversuch (Stand der Technik)

Als Vergleichsversuch wurde der Aktivator DELO Quick 5004 mit einem 4μm Rakel aufgebracht auf die Bleche des Beispiels 1. Auf ein Bürsten wurde verzichtet. Die nachfolgenden Schritte waren wie folgt:

- Aufbringen des Aktivators DELO Quick 5004 mit 4 μm Rakel
- 10 min Ablüften des Aktivators
- Aufbringen des DELO ML 5327 mit 4 μm Rakel auf aktivierter Oberfläche
- Härtung analog Ausführungsbeispiel 1.

Es stellte sich heraus, dass die Festigkeiten der Verbindungen sowie die Geschwindigkeit bei der Aushärtung sich von den Ergebnissen des Ausführungsbeispiels 1 innerhalb der Messgenauigkeiten nicht unterschieden.

Ausführungsbeispiel 3:

Bestimmung des Kupfergehalts in den Proben aus Ausführungsbeispiel 2

Für die Proben aus dem Ausführungsbeispiel 2 wurde gemäß Messbeispiel 2a der Kupfergehalt bestimmt. Es ergab sich, dass für die nicht-gebürstete Variante kein Kupfer feststellbar war, während für die gebürsteten Varianten ein Kupferteil zwar vorhanden war, aber nahe der Nachweisgrenze (gemessen nach Messbeispiel 2a, 0,1 Atom-%) lag. Dementsprechend liegt der Bedeckungsgrad der Oberfläche mit Kupfer bei ca. 0,1% bzw. bei ca. 0,2% bei Annahme, dass Kupferoxid vorliegt.

Es wird noch darauf hingewiesen, dass in keinem Fall das Elektroblechband freigelegt wurde, da sich Eisen nicht nachweisen lies.

Ausführungsbeispiel 4:

Nachfolgend wurden die Proben aus dem Ausführungsbeispiel 1 und dem Ausführungsbeispiel 2 sowie aus dem Vergleichsbeispiel gemäß Messbeispiel 3 auf Kupferpartikel untersucht.

Dabei stellte sich heraus, dass in allen drei gebürsteten Beispielen (aus Ausführungsbeispiel 1 sowie die gebürsteten Beispiele aus dem Ausführungsbeispiel 2) Kupferpartikel bereits im Lichtmikroskop erkennbar waren. Die Partikel wiesen Größen (größter Abstand der Ränder in Draufsicht) zwischen 1 $\mu$m bis 15 $\mu$m auf. Der Oberflächenbedeckungsgrad durch Ausmessen und Auszählen der Partikel auf 10 mikroskopischen Aufnahmen nach Messbeispiel 3 ergab Oberflächenbedeckungsgrade zwischen 0,02 und 0,1 %. Dagegen lagen in den beiden anderen Beispielen (nicht gebürstet bzw. ein Kupferauftrag gemäß dem Stand der Technik) keine Partikel vor.

Hieraus lässt sich ableiten, dass die Kupferpartikel (die auch nach dem Aushärten noch nachweisbar sind) einen deutlichen Hinweis auf das erfindungsgemäße Verfahren geben.

Ausführungsbeispiel 5:

Ein Elektroblech M310-50A mit einem C5 Isolationslack EB5308 (Hersteller Arcelor Mittal) der Größe eines Zugscherblechs (100 mm x 25 mm) wird mit verschiedenen Bürsten (verschiedene Borsten) im Bereich der Klebfläche (10 mm) gebürstet.

Die Bürsten haben eine Behandlungsbreite von 30 mm und bestehen aus einer Reihe von Borsten, die dicht gepackt aneinander liegen, z.B. bei einem Borstendurchmesser von 125 $\mu$m liegen 240 Borsten nebeneinander und parallel ausgerichtet in einer Reihe vor. Die Länge der Borsten variiert.

Der Winkel zwischen Borstenrichtung und Bewegungsvektor des Elektroblechs beträgt 45 °. Die Borstenende bilden eine gerade Linie. Diese Linie ist parallel zur Stahloberfläche und orthogonal zum Bewegungsvektor des Elektroblechs ausgerichtet. Der Anpressdruck wird eingestellt, indem die Borstenhalterung der Bürste nach Kontakt der Borstenenden mit dem Stahlblech um weitere 3 mm in Richtung der Stahloberfläche positioniert wird. Hierbei findet die elastische Verformung der Borsten statt.

Nun wird das Elektroblech mit einer Geschwindigkeit von 10 m/min unter der Bürste hindurchgefahren. Es wird die Anzahl der Bürstvorgänge variiert.

Die sich ergebenden Oberflächenwiderstände werden gemessen, die Elementzusammensetzung der Oberfläche mittels XPS nach dem Messbeispiel 2b bestimmt und die Rauigkeit bestimmt (s.o.).

Tabelle Probenmatrix

| Bürste | Kein Bürstvorgang | Bürstvorgang 10 mal | Bürstvorgang 100 mal |
|---|---|---|---|
| Keine Bürste | Ref | | |
| Cu 99,9% weichgeglüht<br>Durchmesser 50 $\mu$m<br>Borstenlänge 12,5 mm<br>Normalkraft bei 3mm Anpressen: 60 +- 5 mN | | Cu-50-10 | |
| Cu 99,9% weichgeglüht<br>Durchmesser 125 $\mu$m<br>Borstenlänge 12,5 mm<br>Normalkraft bei 3mm Anpressen: 740 +- 20 mN | | Cu-125-10 | Cu-125-100 |

(fortgesetzt)

| Bürste | Kein Bürstvorgang | Bürstvorgang 10 mal | Bürstvorgang 100 mal |
|---|---|---|---|
| Cu 99,9%<br>Zugfestigkeit: 260 +- 15 MPa (weichgeglüht)<br>Durchmesser 500 $\mu$m<br>Borstenlänge 30 mm<br>Normalkraft bei 3mm Anpressen: 3920 +- 82 mN | | Cu-500-10 | |
| Messing CuZn36<br>Zugfestigkeit: 814 +- 47 MPa (federhart)<br>Durchmesser 400 $\mu$m<br>Borstenlänge 30 mm<br>Normalkraft bei 3mm Anpressen: 2551 +- 74 mN | | M-400-10 | M-400-100 |

Jeweils ein weiteres Elektroblech wird mit dem anaerob härtenden Klebstoff DELO ML 5327 durch eine Rakel mit einer nominellen Schichtdicke von 4 $\mu$m beschichtet.

Die gebürsteten Seiten der Proben bzw. die mit Aktivator beschichtete Referenzprobe werden mit der klebstoffbeschichteten Seite des zweiten Blechs in Kontakt gebracht und mit einer Klammer fixiert (anaerobe Bedingungen). Der Anpressdruck beträgt 100 kPa. Nach 5 Minuten bei Raumtemperatur wird getestet, ob die Festigkeit der Klebung ausreicht, um die Klebungen bewegen zu können (Handling Festigkeit).

| Probe | Handlingfestigkeit (Vernetzung nach 5 min) | Festigkeiten nach 24h [MPa] | Cu-Konzentration an Oberfläche (metallisch) [at%] | Fe-Konzentration an Oberfläche (oxidisch) [at%] | Widerstandsmessung (Messvorschrift IFAM) [Ohm] | Rauigkeiten $R_a$ / $R_Z$ [μm] |
|---|---|---|---|---|---|---|
| Ref | Nein | weisgrenze | < Nachweisgrenze | 0,7 | 5,3 +-1,9 | 0,48±0,05 / 4,83±0,62 |
| Ref + DELO Quick 5004 | | 1,33 +-0,61 | | | | |
| Cu-50-10 | Nein | 1,5 +- 0,48 | 0,01 | 0,1 | 4,6 +- 1,5 | |
| Cu-125-10 | Ja | 1,57 +-0,22 | 0,04 | 0,1 | 4,7 +- 1,5 | 0,46±0,01 / 4,75±0,40 |
| Cu-125-100 | Ja | (1,97) | 0,17 | 0,2 | 5,1 +- 1,0 | 0,48±0,05 / 4,83±0,62 |
| Cu-500-10 | Ja | 2,0 +-0,1 | 0,03 | 0,3 | 4,4 +-1,6 | 0,48±0,05 / 5,28±0,60 |
| M-400-10 | Nein | 1,82 +-0,19 | 0,01 | 0,2 | 4,4 +- 1,9 | 0,48±0,06 / 5,04±0,41 |
| M-400-100 | Ja | (2,0) | 0,15 | 0,2 | 1,0+-0,5 | 0,49±0,05 / 5,62±0,66 |
| Blech blank geschliffen | | | | | 0,054 +-0,01 | 0,59±0,07 / 5,47±0,40 |

Zunächst ist anzumerken, dass bei sämtlichen erfindungsgemäßen Proben im Gegensatz zur Referenz eine Aushärtung des Klebstoffes stattfand. Allerdings ist bei den Varianten, die im Ergebnis eine Kupferkonzentration an der Oberfläche von ≤ 0,01 Atom-% besaßen, der Aushärteprozess des Klebstoffes verhältnismäßig langsam. Dementsprechend ist es bevorzugt, dass im erfindungsgemäßen Verfahren die resultierende Kupferkonzentration an der Oberfläche gemessen mittels XPS ≥ 0,015 Atom-%, bevorzugt ≥ 0,02 Atom-% beträgt, bezogen auf die mittels XPS gemessenen Atome.

Aus der Fe-Konzentration an der Oberfläche ergibt sich, dass auch bei der Probe M-400-100 die Isolierschicht nicht abgerieben wurde, anderenfalls wäre die Eisenkonzentration deutlich höher. Es stellt sich aber heraus, dass die Widerstandswerte deutlich schlechter sind.

Dies kann - ohne an eine Theorie gebunden zu sein - durch eine zu hohe Abrasion der Isolierschicht erklärt werden, wobei davon ausgegangen werden muss, dass die Isolierschicht nicht vollständig entfernt wurde. Dennoch zeigte sich, dass der Reibprozess so gesteuert werden kann, dass Widerstandswerte für das Elektroblech erhalten bleiben, die auch für höherwertige Anforderungen geeignet sind. Daher ist es im Sinne der vorliegenden Erfindung bevorzugt, dass der Reibprozess so durchgeführt wird, dass nach dem Reiben ein Widerstand von ≤ 2,0 Ohm, bevorzugt ≤ 2,5 Ohm, weiter bevorzugt ≤ 3 Ohm, besonders bevorzugt ≤ 4 Ohm für das Elektroblech mit Isolierschicht erhalten bleibt.

**Patentansprüche**

1. Verfahren zur Herstellung eines Elektroblechpaketes (11), umfassend die Schritte:

   a) Bereitstellen von Elektroblechband (19) als Ausgangsmaterial für die Blechlamellen für das Elektroblechpaket (11),
   b) Beschichten des Elektroblechbandes (19) mit einer Isolationsschicht auf einer oder beiden Seiten,
   c) Beschichten des Elektroblechbandes (19) auf der einen Seite mit einem anaerob härtenden Klebstoff,
   d) Reiben des Elektroblechbandes (19) mit einer Reibvorrichtung (3), die beryllium- und/oder übergangsmetallhaltige Oberflächenstrukturen umfasst,
   e) Trennen der einzelnen Lamellen für das Elektroblechpaket (11) aus dem Elektroblechband (19),
   f) Kontaktieren der Lamellen für das Elektroblechpaket (11) jeweils durch Inkontaktbringen der einen Seite der einen Lamelle mit der anderen Seite der nächsten Lamelle und
   g) Aushärten des Klebstoffes.

2. Verfahren nach Anspruch 1, wobei Schritt g) wenigstens teilweise und/oder Schritt f) in der Bremse (9) der Stanzvorrichtung erfolgt.

3. Verfahren nach Anspruch 1 oder 2, wobei die Oberflächenstrukturen berylliumhaltige und/oder übergangsmetallhaltige Borsten und Borsten umfasst, die weder Beryllium noch Übergangsmetalle enthalten.

4. Verfahren nach einem der vorangehenden Ansprüche, wobei die beryllium- und/oder übergangsmetallhaltigen Oberflächenstrukturen Material umfassen oder daraus bestehen, ausgewählt aus der Gruppe bestehend aus elementarem Kupfer, Messing, Bronze, Eisen, Stahl, Mangan und Beryllium.

5. Verfahren nach einem der vorangehenden Ansprüche, wobei die übergangsmetallhaltigen Oberflächenstrukturen einen Durchmesser von ≤ 1 mm und/oder eine Vickershärte von 25 - 200 für die beryllium- und/oder übergangsmetallhaltigen Oberflächenstrukturen aufweisen und/oder eine nominelle Zugfestigkeit von 10 MPa - 600 MPa besitzen.

6. Verfahren nach einem der vorangehenden Ansprüche, wobei die Vorrichtung eine Bürste ist (3) ausgewählt ist aus der Gruppe bestehend aus Tellerbürste, Plattenbürste, Streifenbürste, Schwertbürste, Topfbürste, Kegelbürste, Rollenbürste, Rundbürsten und Spiralbürste.

7. Verfahren nach einem der vorangehenden Ansprüche, wobei in Schritt c) der Klebstoff flächig oder teilflächig aufgetragen wird.

8. Verfahren nach einem der vorangehenden Ansprüche, wobei in Schritt c) der Klebstoff in einer Schichtdicke von 0,3 μm - 50 μm, bevorzugt von 0,5 μm - 20 μm und besonders bevorzugt von 0,5 μm bis 6 μm aufgetragen wird.

9. Verfahren nach einem der vorangehenden Ansprüche, wobei der Bereich auf den der Klebstoff und/oder der Bereich, der gerieben wird, jeweils mittels einer Maske (17) beschränkt wird.

10. Verfahren nach einem der vorangehenden Ansprüche, wobei die jeweils erste und letzte Lamelle des Elektroblechpaketes (11) an ihrer nach außen gerichteten Seite nicht Schritt c) unterworfen werden.

11. Verfahren nach einem der vorangehenden Ansprüche, wobei vor Schritt c) die eine Seite einen haftverbessernden Vorbehandlungsschritt erfährt.

12. Verfahren nach einem der vorangehenden Ansprüche, wobei die Aushärtung des Klebstoffes durch Energiezufuhr unterstützt wird.

13. Verfahren nach einem der vorangehenden Ansprüche, wobei nach Schritt d) auf der gebürsteten Fläche eine Konzentration von Übergangsmetall von ≤ 2 Atom-% vorhanden ist, gemessen mittels ESCA und bezogen auf die Gesamtzahl der mit ESCA erfassten Atome.

14. Elektroblechpaket (11) hergestellt oder herstellbar durch ein Verfahren nach einem der vorangehenden Ansprüche, wobei zwischen der Isolierschicht und dem Klebstoff oder im Klebstoff beryllium- und/oder übergangsmetallhaltige Partikel vorhanden sind.

**Claims**

1. Method for producing an electrical sheet pack (11), comprising the steps of:

   a) providing electrical sheet strip (19) as starting material for the sheet laminations for the electrical sheet pack (11),
   b) coating the electrical sheet strip (19) with an insulation layer on one or both sides,
   c) coating the electrical sheet strip (19) on one side with an anaerobically curing adhesive,
   d) rubbing the electrical sheet strip (19) with a rubbing device (3) which comprises beryllium-containing and/or transition metal-containing surface structures,
   e) separating the individual laminations for the electrical sheet pack (11) from the electrical sheet strip (19),
   f) contacting the laminations for the electrical sheet pack (11) in each case by contacting one side of one lamination with the other side of the next lamination, and
   g) curing the adhesive.

2. Method according to Claim 1, wherein step g) takes place at least partially and/or step f) takes place in the brake (9) of the punching device.

3. Method according to Claim 1 or 2, wherein the surface structures comprises beryllium-containing and/or transition metal-containing bristles and bristles which contain neither beryllium nor transition metals.

4. Method according to any of the preceding claims, wherein the beryllium-containing and/or transition metal-containing surface structures comprise or consist of material selected from the group consisting of elemental copper, brass, bronze, iron, steel, manganese, and beryllium.

5. Method according to any of the preceding claims, wherein the transition metal-containing surface structures have a diameter of ≤ 1 mm and/or a Vickers hardness of 25 - 200 for the beryllium-containing and/or transition metal-containing surface structures and/or possess a nominal tensile strength of 10 MPa - 600 MPa.

6. Method according to any of the preceding claims, wherein the device is a brush (3) selected from the group consisting of disk brush, plate brush, strip brush, sword brush, cup brush, cone brush, roller brush, round brushes and spiral brush.

7. Method according to any of the preceding claims, wherein the adhesive in step c) is applied over the area or part of the area.

8. Method according to any of the preceding claims, wherein the adhesive in step c) is applied in a layer thickness of 0.3 $\mu$m - 50 $\mu$m, preferably of 0.5 $\mu$m - 20 $\mu$m, and more preferably of 0.5 $\mu$m to 6 $\mu$m.

9. Method according to any of the preceding claims, wherein the region to which the adhesive and/or the region which is rubbed is limited in each case by means of a mask (17).

10. Method according to any of the preceding claims, wherein the respective first and last laminations of the electrical sheet pack (11) are not subjected to step c) on their outwardly directed side.

11. Method according to any of the preceding claims, wherein before step c) one side undergoes an adhesionimproving pretreatment step.

12. Method according to any of the preceding claims, wherein the curing of the adhesive is assisted by supply of energy.

13. Method according to any of the preceding claims, wherein after step d) on the brushed area there is a concentration of transition metal of $\leq 2$ atom%, measured by means of ESCA and based on the total number of atoms detected by ESCA.

14. Electrical sheet pack (11) produced or producible by a method according to any of the preceding claims, wherein between the insulating layer and the adhesive or in the adhesive there are beryllium-containing and/or transition metal-containing particles.

**Revendications**

1. Procédé de fabrication d'un paquet de tôles électriques (11), comprenant les étapes :

a) de fourniture de bande de tôle électrique (19) en tant que matériau de départ pour les lamelles de tôle pour le paquet de tôles électriques (11),
b) de revêtement de la bande de tôle électrique (19) d'une couche d'isolation sur un ou les deux côtés,
c) de revêtement de la bande de tôle électrique (19) sur un côté avec un adhésif à durcissement anaérobie,
d) de frottement de la bande de tôle électrique (19) avec un dispositif de frottement (3), qui comprend des structures superficielles contenant du béryllium et/ou un métal de transition,
e) de séparation des diverses lamelles pour le paquet de tôles électriques (11) de la bande de tôle électrique (19),
f) de mise en contact des lamelles pour le paquet de tôles électriques (11) respectivement en amenant en contact un côté d'une lamelle avec l'autre côté de la lamelle suivante, et
g) de durcissement de l'adhésif.

2. Procédé selon la revendication 1, dans lequel l'étape g) au moins en partie et/ou l'étape f) ont lieu dans le frein (9) du dispositif d'estampage.

3. Procédé selon la revendication 1 ou 2, dans lequel les structures superficielles comprennent des poils contenant du béryllium et/ou un métal de transition et des poils qui ne contiennent ni béryllium ni métal de transition.

4. Procédé selon l'une quelconque des revendications précédentes, dans lequel les structures superficielles contenant du béryllium et/ou un métal de transition comprennent du matériau ou sont constituées de matériau choisi parmi le groupe constitué de cuivre élémentaire, de laiton, de bronze, de fer, d'acier, de manganèse et de béryllium.

5. Procédé selon l'une quelconque des revendications précédentes, dans lequel les structures superficielles contenant un métal de transition présentent un diamètre $\leq 1$ mm et/ou une dureté Vickers de 25 - 200 pour les structures superficielles contenant du béryllium et/ou un métal de transition et/ou possèdent une résistance à la traction nominale de 10 MPa - 600 MPa.

6. Procédé selon l'une quelconque des revendications précédentes, dans lequel le dispositif est une brosse (3) choisie parmi le groupe comprenant une brosse à disque, une brosse à plaque, une brosse à bande, une brosse en épée, une brosse boisseau, une brosse conique, une brosse cylindrique, une brosse ronde et une brosse hélicoïdale.

7. Procédé selon l'une quelconque des revendications précédentes, dans lequel l'adhésif est appliqué lors de l'étape c) en surface ou partiellement en surface.

8. Procédé selon l'une quelconque des revendications précédentes, dans lequel, lors de l'étape c), l'adhésif est appliqué en une épaisseur de couche de 0,3 $\mu$m - 50 $\mu$m, de manière préférée de 0,5 $\mu$m - 20 $\mu$m et de manière particulièrement préférée de 0,5 $\mu$m à 6 $\mu$m.

9. Procédé selon l'une quelconque des revendications précédentes, dans lequel la zone sur laquelle l'adhésif est appliqué, et/ou la zone, qui est frottée, est/sont limitée(s) respectivement au moyen d'un masque (17).

10. Procédé selon l'une quelconque des revendications précédentes, dans lequel la première et la dernière lamelle respectivement du paquet de tôles électriques (11) ne sont pas soumises à l'étape c) sur leur côté dirigé vers l'extérieur.

11. Procédé selon l'une quelconque des revendications précédentes, dans lequel un côté subit avant l'étape c) une étape de prétraitement d'amélioration de l'adhérence.

12. Procédé selon l'une quelconque des revendications précédentes, dans lequel le durcissement de l'adhésif est soutenu par apport d'énergie.

13. Procédé selon l'une quelconque des revendications précédentes, dans lequel une concentration de métal de transition $\leq$ 2 % atomique est présente après l'étape d) sur la surface brossée, mesurée au moyen d'une ESCA [*électron spectroscopy for chemical analysis - spectroscopie électronique pour l'analyse chimique*] et par rapport au nombre total des atomes détectés par ESCA.

14. Paquet de tôles électriques (11) fabriqué ou pouvant être fabriqué par un procédé selon l'une quelconque des revendications précédentes, dans lequel sont présentes, entre la couche isolante et l'adhésif ou dans l'adhésif, des particules contenant du béryllium et/ou un métal de transition.

Fig. 1

Fig. 2

Fig. 3

Fig. 4

**IN DER BESCHREIBUNG AUFGEFÜHRTE DOKUMENTE**

**In der Beschreibung aufgeführte Patentdokumente**

- DE 102013017107 A1